# EUROPEAN PATENT APPLICATION

(11) **EP 1 515 272 A2**
(43) Date of publication of application: **16.03.2005**
(21) Application number: 04020170.9
(22) Date of filing: 25.08.2004
(51) Int. Cl.: G06T 3/40

(54) **System and method for resizing tiles on a computer display**

(30) Priority: 09.09.2003 US 658786
(71) Applicant: MICROSOFT CORPORATION, Redmond, WA 98052 (US)
(72) Inventor: Matthews, David A., Seattle WA 98121 (US); Debry, Fabrice A., Bellevue WA 98005 (US); Mann, Justin, Kirkland WA 98033 (US); Crane, Andrew S., Seattle WA 98121 (US); Cummins, Charles, Seattle WA 98115 (US); Hally, Judson Craig, Sammamish WA 98074 (US); Ligameri, Mark R., Snohomish WA 98296 (US)
(74) Representative: Grünecker, Kinkeldey, Stockmair & Schwanhäusser Anwaltssozietät

(57) **Abstract**

A system and method for resizing tiles on a computer display is provided. The tiles are automatically sized until a user takes control after which the user may manually size the tiles. Size limits may be set for the tiles. If an attempt is made to automatically resize a tile above a specified limit, then a notification may be sent to the user requesting approval for the new tile size. If the user does not approve the new size, then the tile will be placed in a manual sizing mode in which further automatic resizing is limited. If the user approves the new size, then further automatic resizing may occur without requesting further approval. The tiles are prevented from being automatically resized too frequently, which could be distracting or annoying to a user.

## Description

### FIELD OF THE INVENTION

The embodiment of the present invention relates to tiles provided on a computer display, and more particularly, to a system and method for resizing the tiles.

### BACKGROUND OF THE INVENTION

Conventional applications provide desired content to users on a portion of the display in an area that may be referred to as a tile. The amount of room taken up by the application's user interface may vary. In general, it is important for the application's tile to have enough room to show the necessary information and controls.

Some applications and Web sites choose the size of their tile. One example would be pop-up ads, which are provided on the display when the user enters a particular Web site or as otherwise triggered. The size of the pop-up ads are designated by the application or Web site. One drawback of this type of system is that the user is not able to adjust the size of the tile that is provided.

Some applications choose an initial size for the tile automatically and then allow the user to resize the tile. This type of system is used for various types of applications, such as the popular solitaire card game. When this type of application is first opened, the initial size of the tile is chosen automatically, and then the user is allowed to resize it. However, these types of applications never try to resize the tile again, regardless of what other applications are opened or what other spacing becomes available on the display.

Certain known applications will also grow or shrink when the user clicks in them. One example would be in the "Add To Favorites" menu that grows when the user selects "More". However, these types of applications do not resize automatically, and therefore provide only a manual resize type of operation.

The embodiment of the present invention is related to providing a system and method that overcome the foregoing and other disadvantages. More specifically, the embodiment of the present invention is related to a system and method that provides for both automatic and manual resizing of tiles.

### SUMMARY OF THE INVENTION

A system and method for resizing tiles on a computer display is provided. In accordance with one aspect of the invention, a user interface is able to control its own tile size until the user decides to change it, after which the user remains in control of the size. It will be appreciated that it is important for an application to be able to take enough room in its user interface to show all the necessary information and controls. In the particular example of a Sidebar, which is an always visible piece of user interface that is shared by many applications, it is also important that the user stays in control of how the available space is allocated. If applications were able to take as much room as they wanted for their tiles and users couldn't adjust their size, users would not be able to control the allocation of space in the Sidebar. This would encourage tile developers to build tiles that grew very large and took over the Sidebar in order to get more space for their applications. On the other hand, if applications were not able to control their size at all, then users would be forced to manually control the size of all of the tiles. It would not be possible to build a tile that grew and shrunk as needed, meaning that tiles might take too much or too little space for the data that they needed to show. By allowing both the application to choose its own size and allowing users to override that size, the embodiment of the present invention makes it possible to build tiles that use an appropriate amount of space, wherein users are able to stop poorly designed tiles from taking up too much space. This is particularly useful in an embodiment such as a Sidebar, in which there is limited space and in which the tiles are not allowed to overlap (unlike certain other types of windows), thus making the sizing of tiles in the Sidebar particularly important.

In accordance with another aspect of the invention, a manual control is provided by which a user can manually resize a tile. In one embodiment, if the user doesn't like the size of the tile, the user can resize the tile by dragging the bottom edge until the desired size is achieved. Once the user sets the size in this way, the tile is placed in a manual sizing mode. In this mode, the application no longer has control over the size of the tile, and may only show content in the area that the user has designated. In one embodiment, the manual sizing mode is only entered if the size of the tile was actually changed by the user. In other words, if a tile is already at a maximum size and the user tries to make it bigger, no change will occur and the manual sizing mode will not be entered. Once the tile is placed in the manual sizing mode, the user may also take certain actions to place the tile back into the automatic sizing mode. In one embodiment, the user may double-click on a resize bar to set the tile back into the automatic sizing mode.

In accordance with another aspect of the invention, a size limit may be set for a tile. In one embodiment, this may prevent a user from resizing a tile to a uselessly large size. An application may specify a tile's maximum size so that the user cannot resize it to be larger than is useful. In this embodiment, the tile simply stops resizing if the user tries to make it bigger than the maximum size. In general, the size limits may be optional and may be specified in the manifest. The size limits may be expressed in terms of pixels, percentage of the screen size, or other measurement units.

In accordance with another aspect of the invention, maximum size limits may also be provided to prevent tiles from automatically resizing themselves beyond a desired size. In other words, tiles are limited to a reasonable size, in order to prevent them from growing too large and taking over the entire sidebar.

In accordance with another aspect of the invention, automatic and manual sizing modes may be switched between depending on a user's response. Initially, the tile is allowed to resize itself as needed. If the tile wishes to resize itself past the large tile size threshold, the user is provided with a notification asking them to approve the new size. In one embodiment, the maximum size threshold is provided in terms of pixels rather than a percentage of the screen because the amount of information that can be shown defines a reasonable tile. Once the tile attempts to resize itself beyond the maximum limit, a notification is provided that points to the header of the tile, and which asks the user whether the tile should be allowed to become the new large size, or whether it should stay at its previous smaller size. If the user indicates that the tile should be allowed to become the larger size, then the tile resizes itself and stays in automatic sizing mode. The tile may then be allowed to grow and shrink as much as it wants without the notification being reissued. If the user answers no to the notification and thus indicates that the tile should not be allowed to grow to the new large size, then the tile is set back to its previous size, and the tile is set to manual sizing mode, in which further automatic resizing attempts are restricted.

In accordance with another aspect of the invention, the tiles are prevented from changing size too frequently, which could be distracting or annoying to a user. In one embodiment, the tile is allowed to increase its size whenever it wants, but is prevented from shrinking within a certain time interval (e.g., 60 seconds) from the last grow. Once the tile content changes such that the tile would want to change size, the proposed new size is measured and compared to the existing size. If the proposed new size is larger than the existing size, the tile is allowed to grow immediately and also keeps track of the current time. If the proposed new size is smaller than the existing size, then a determination is made as to how long it has been since the last recorded grow. If the elapsed time since the last recorded grow is smaller than the time threshold (e.g., 60 seconds), then the change in tile size is queued until the time threshold is reached, at which point the tile is allowed to change size. If at the time that the tile wishes to change size the time threshold has already been reached, then the tile is allowed to change size immediately. It will be appreciated that with this scheme, the tile is intended to always be large enough to show the full content, and at times when the content is quickly increasing and decreasing in size, the tile may temporarily be larger than it needs to be.

### BRIEF DESCRIPTION OF THE DRAWINGS

The foregoing aspects and many of the attendant advantages of this invention will become more readily appreciated as the same become better understood by reference to the following detailed description, when taken in conjunction with the accompanying drawings, wherein:
FIGURE 1 is a block diagram of a general purpose computer system suitable for implementing an embodiment of the present invention;
FIGURE 2 is a flow diagram illustrative of a general routine for the resizing of a tile;
FIGURE 3 is a diagram of a screen display with a sidebar including a set of tiles;
FIGURE 4 is a flow diagram illustrative of a routine for manually setting the size of a tile and in which a sizing mode is determined;
FIGURE 5 is a diagram of a screen display in which a tile has been manually resized in accordance with the routine of FIGURE 4;
FIGURE 6 is a flow diagram illustrative of a routine in which a context menu is provided for a tile and in which a user makes a selection from the context menu;
FIGURE 7 is a diagram of a screen display including a context menu for a tile in accordance with the routine of FIGURE 6;
FIGURE 8 is a diagram of a screen display illustrative of a tile having been automatically resized in accordance with a selection from the context menu of FIGURE 7;
FIGURES 9A and 9B are flow diagrams illustrative of a routine for automatically resizing a tile and requesting approval from a user for exceeding a maximum size;
FIGURE 10 is a diagram of a screen display showing a notification that is provided to a user indicating that the new tile size would be above the previously set maximum size, in accordance with the routine of FIGURES 9A and 9B;
FIGURE 11 is a diagram of a screen display illustrating the options that are provided once the user selects the notification of FIGURE 10; and
FIGURE 12 is a diagram of a screen display illustrating the returning of the tile to the previous size once the user selects the "no" option from FIGURE 11.

### DETAILED DESCRIPTION OF THE PREFERRED EMBODIMENT

The embodiment of the present invention is directed to a system and method for resizing tiles on a computer display. As will be described in more detail below, in accordance with the embodiment of the present invention, the tiles are automatically sized until a user takes control, after which the user may manually set the size of the tiles. By allowing both the application to choose its own size and allowing users to override that size, properly designed tiles can be provided that use the right amount of space, and users are able to stop poorly designed tiles from taking too much space.

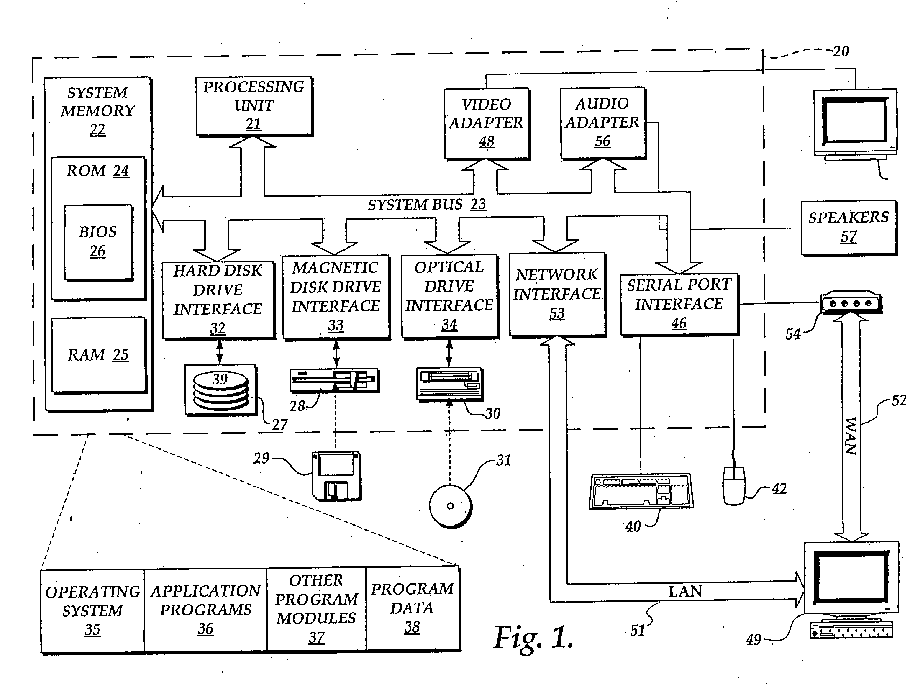

FIGURE 1 and the following discussion are intended to provide a brief, general description of a suitable computing environment in which an embodiment of the present invention may be implemented. Although not required, the embodiment of the invention Will be described in the general context of computer-executable instructions, such as program modules, being executed by a personal computer. Generally, program modules include routines, programs, characters, components, data structures, etc., that perform particular tasks or implement particular abstract data types. As those skilled in the art will appreciate, the embodiment of the invention may be practiced with other computer system configurations, including hand-held devices, multiprocessor systems, microprocessor-based or programmable consumer electronics, network PCs, minicomputers, mainframe computers, and the like. The embodiment of the invention may also be practiced in distributed computing environments where tasks are performed by remote processing devices that are linked through a communications network. In a distributed computing environment, program modules may be located in both local and remote memory storage devices.

With reference to FIGURE 1, an exemplary system for implementing the embodiment of the invention includes a general purpose computing device in the form of a conventional personal computer 20, including a processing unit 21, system memory 22, and a system bus 23 that couples various system components including the system memory 22 to the processing unit 21. The system bus 23 may be any of several types of bus structures including a memory bus or memory controller, a peripheral bus, and a local bus using any of a variety of bus architectures. The system memory includes read-only memory (ROM) 24 and random access memory (RAM) 25. A basic input/output system (BIOS) 26, containing the basic routines that helps to transfer information between elements within the personal computer 20, such as during start-up, is stored in ROM 24. The personal computer 20 further includes a hard disk drive 27 for reading from or writing to a hard disk 39, a magnetic disk drive 28 for reading from or writing to a removable magnetic disk 29, and an optical disk drive 30 for reading from or writing to a removable optical disk 31, such as a CD-ROM or other optical media. The hard disk drive 27, magnetic disk drive 28, and optical disk drive 30 are connected to the system bus 23 by a hard disk drive interface 32, a magnetic disk drive interface 33, and an optical drive interface 34, respectively. The drives and their associated computer-readable media provide non-volatile storage of computer-readable instructions, data structures, program modules, and other data for the personal computer 20. Although the exemplary environment described herein employs a hard disk 39, a removable magnetic disk 29, and a removable optical disk 31, it should be appreciated by those skilled in the art that other types of computer-readable media which can store data that is accessible by a computer, such as magnetic cassettes, flash memory cards, digital video disks, Bernoulli cartridges, random access memories (RAMs), read-only memories (ROMs), and the like, may also be used in the exemplary operating environment.

A number of program modules may be stored on the hard disk 39, magnetic disk 29, optical disk 31, ROM 24 or RAM 25, including an operating system 35, one or more application programs 36, other program modules 37 and program data 38. A user may enter commands and information into the personal computer 20 through input devices such as a keyboard 40 and pointing device 42. Other input devices (not shown) may include a microphone, joystick, game pad, satellite dish, scanner, or the like. These and other input devices are often connected to the processing unit 21 through a serial port interface 46 that is coupled to the system bus 23, but may also be connected by other interfaces, such as a parallel port, game port or a universal serial bus (USB). A display in the form of a monitor 47 is also connected to the system bus 23 via an interface, such as a video card or adapter 48. One or more speakers 57 may also be connected to the system bus 23 via an interface, such as an audio adapter 56. In addition to the display and speakers, personal computers typically include other peripheral output devices (not shown), such as printers.

The personal computer 20 may operate in a networked environment using logical connections to one or more personal computers, such as a remote computer 49. The remote computer 49 may be another personal computer, a server, a router, a network PC, a peer device or other common network node, and typically includes many or all of the elements described above relative to the personal computer 20. The logical connections depicted in FIGURE 1 include a local area network (LAN) 51 and a wide area network (WAN) 52. Such networking environments are commonplace in offices, enterprise-wide computer networks, intranets, and the Internet. The LAN and WAN may be wired, wireless or a combination thereof.

When used in a LAN networking environment, the personal computer 20 is connected to the local area network 51 through a network interface or adapter 53. When used in a WAN networking environment, the personal computer 20 typically includes a modem 54 or other means for establishing communications over the wide area network 52, such as the Internet. The modem 54, which may be internal or external, is connected to the system bus 23 via the serial port interface 46. In a networked environment, program modules depicted relative to the personal computer 20 or portions thereof may be stored in the remote memory storage device. It will be appreciated that the network connections shown are exemplary, and other means of establishing a communications link between the computers may be used.

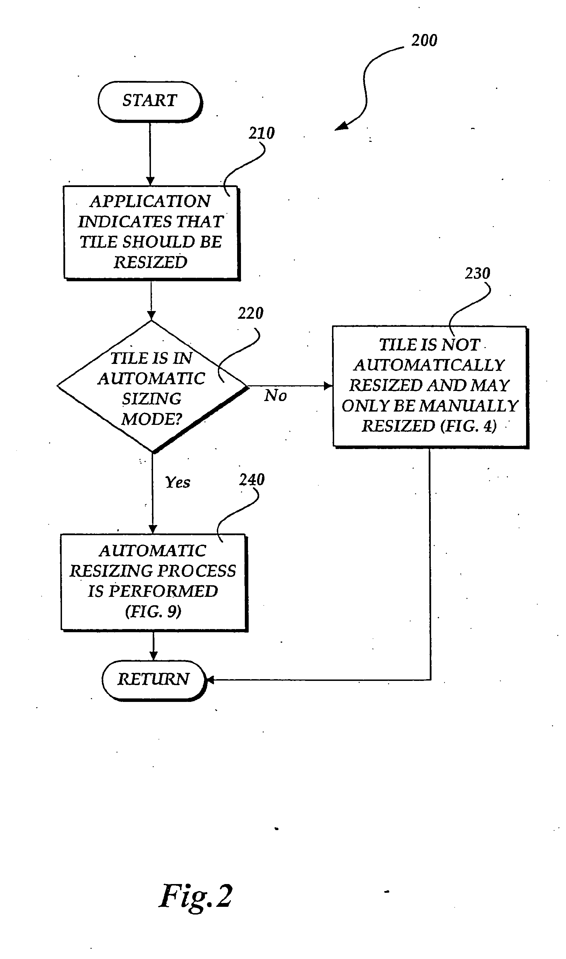

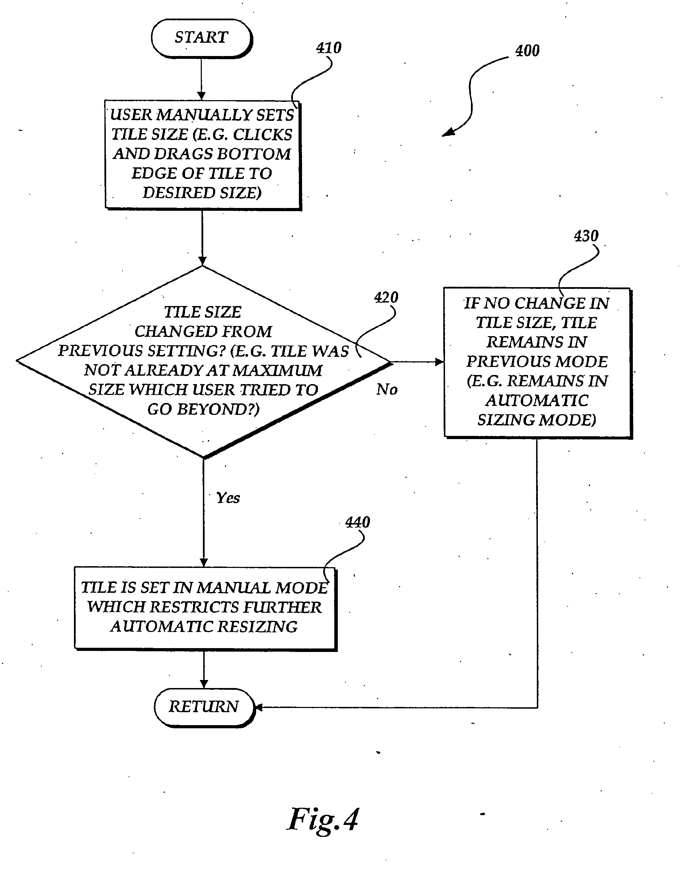

FIGURE 2 is a flow diagram of a general routine 200 that illustrates the general operations for the resizing of a tile. At a block 210, an application indicates that its tile should be resized. At a decision block 220, a determination is made as to whether the tile is in automatic sizing mode. As will be described in more detail below, a tile may be either in an automatic sizing or a manual sizing mode. If the tile is not in an automatic sizing mode, then the routine continues to a block 230, where, since the indication is that the tile is in a manual sizing mode, the tile is not allowed to be automatically resized. The manual resizing process will be described in more detail below with respect to FIGURE 4.

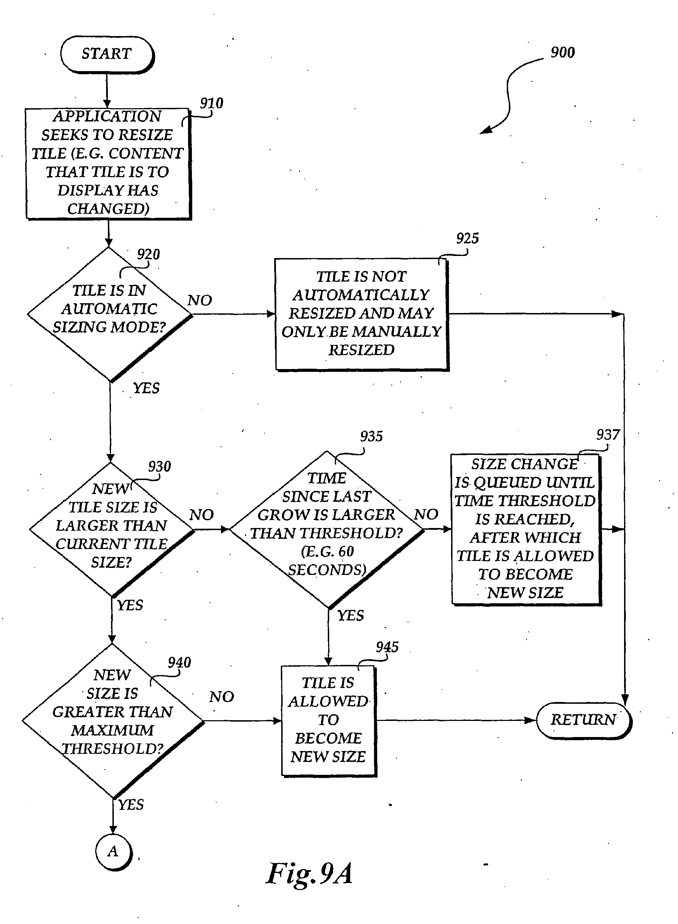

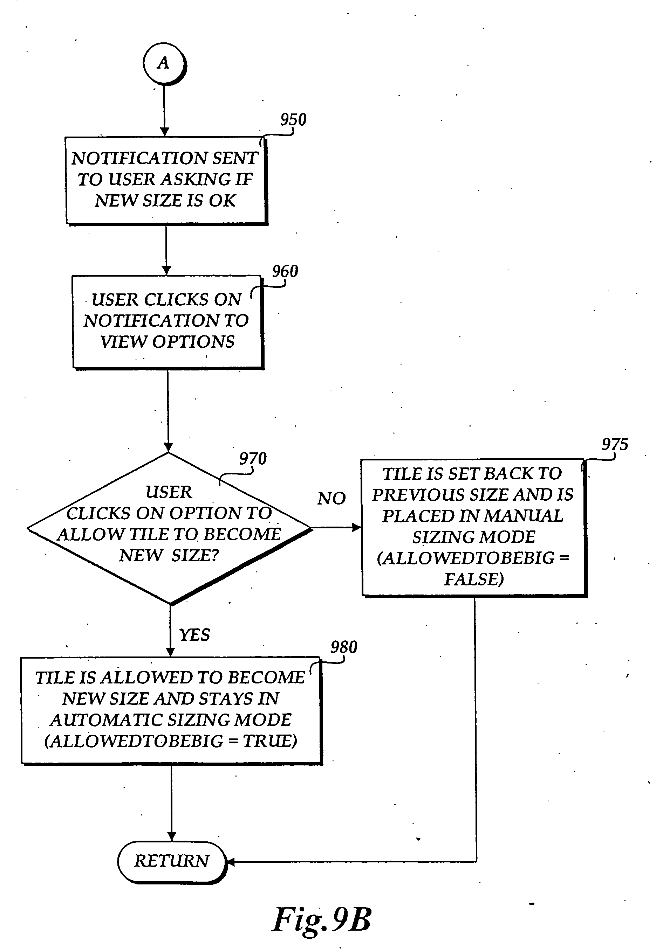

If at decision block 220 the determination is that the tile is in an automatic sizing mode, then the routine continues to a block 240. At block 240, the automatic resizing process is undertaken, as will be described in more detail below with respect to FIGURE 9. In general, when a tile is in an automatic sizing mode, it is allowed to be resized unless it attempts to exceed a maximum limit, in which case a user's authorization may be required.

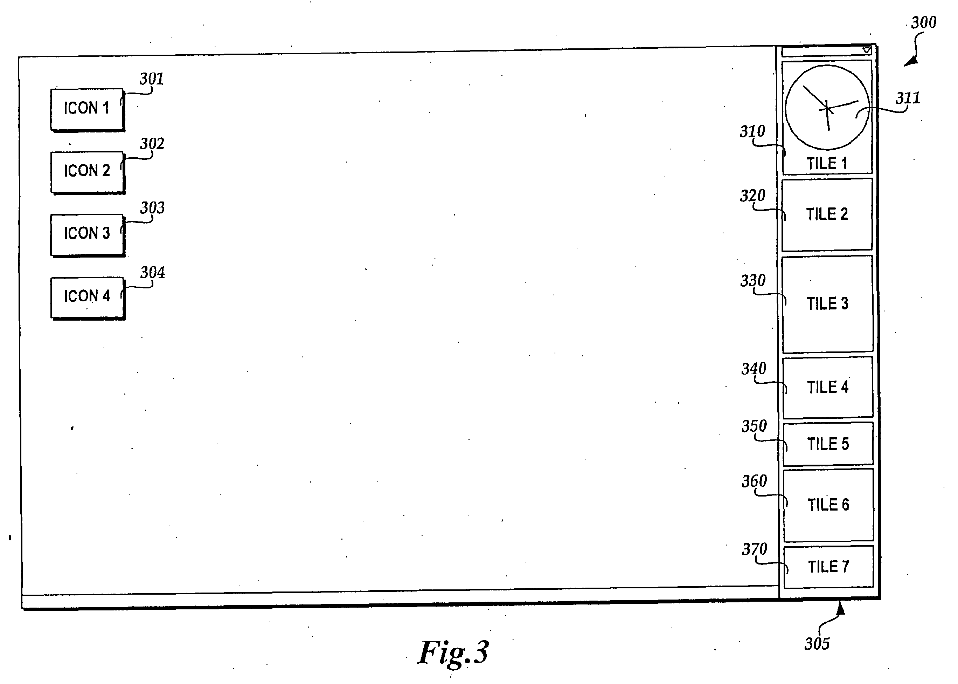

FIGURE 3 is a diagram of a screen display 300 including icons 301-304 and a sidebar 305. The screen display 300 is representative of any generally available computer display, such as a desktop, which may include items such as the icons 301-304 in the general display area. The sidebar 305 includes a series of tiles 310-370, which are designated as TILES 1-7, respectively. For purposes of illustration, tile 310 is shown to include content of a clock 311, and it will be understood that the remaining tiles 320-370 will also generally include content. The tiles 310-370 are shown to take up most of the available space in the sidebar 305.

FIGURE 4 is a flow diagram of a routine 400 by which a user may manually set a tile size and by which a sizing mode is determined. At a block 410, the user manually sets the tile size. In one embodiment, the setting of the tile size may be achieved by the user clicking and dragging the bottom edge of the tile. At a decision block 420, a determination is made as to whether the tile size has changed from the previous setting. For example, if the tile is already at a maximum size, and if the user attempts to increase the tile size beyond the maximum size, no change will occur. If this happens and the tile size is thus not changed, then the routine continues to a block 430, where the tile remains in its previous sizing mode (e.g., if the tile was previously in an automatic sizing mode, then it remains in the automatic sizing mode).

If at decision block 420 it is determined that the tile size has changed from its previous setting, then the routine continues to a block 440. At block 440, the tile is set in manual mode, such that further automatic resizing is restricted. In other words, once a user has determined that they would like to manually set the size of a tile, then the application is prevented from further attempting to automatically resize the tile, and the user remains in control of the sizing. In one embodiment, an option may also be provided for returning the tile to the automatic sizing mode. For example, an option may be provided by which the user can double-click on the resize bar to set the tile back to the automatic sizing mode (which is consistent with known toolbar techniques).

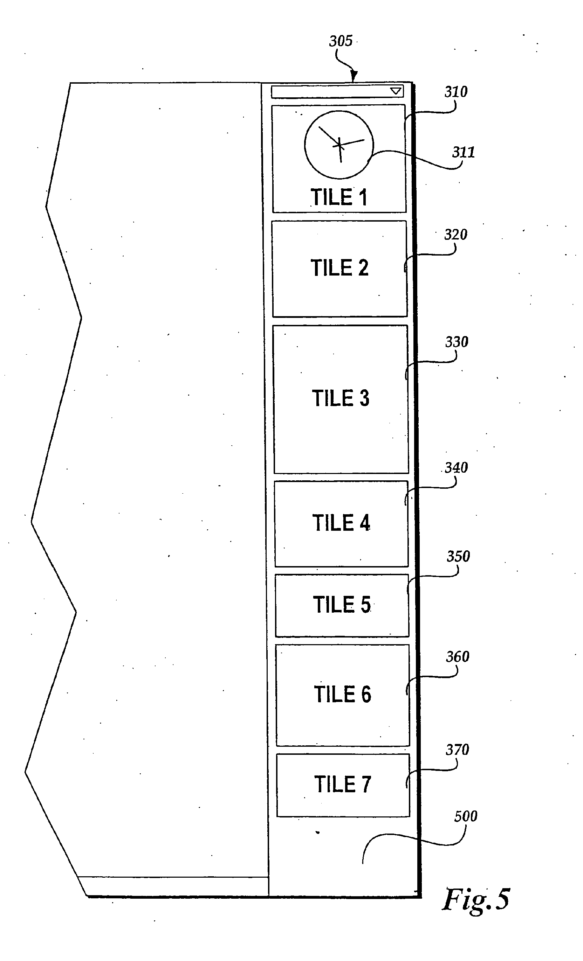

FIGURE 5 is a diagram of a screen display in which a tile has been resized in accordance with the routine of FIGURE 4. As illustrated in FIGURE 5, the tile 310 has been made smaller when compared with its previous size as illustrated in FIGURE 3. As shown in FIGURE 5, the decreasing of the size of the tile 310 has created available space 500 at the bottom of the sidebar 305. In addition, the particular application for the tile 310 has reduced the size of the displayed content (i.e., the clock 311), although it will be appreciated that in other applications the displayed content may instead be truncated when a tile is made smaller.

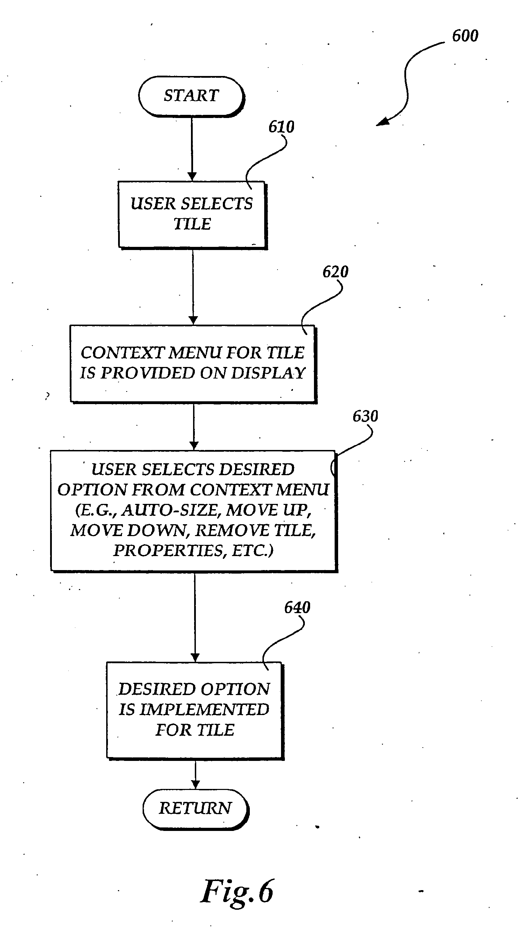

FIGURE 6 is a flow diagram of a routine 600 that illustrates a context menu being provided for a tile and a user making a selection from the context menu. At a block 610, the tile is selected by the user. At a block 620, a context menu is provided on the display for the tile. At a block 630, the user selects a desired option from the context menu. In one embodiment, the context menu may include various options such as autosize, move up, move down, remove tile, properties, etc. At a block 640, the desired option that was selected by the user is implemented for the tile. For example, if the user selected to autosize the tile, the tile will automatically be resized accordingly.

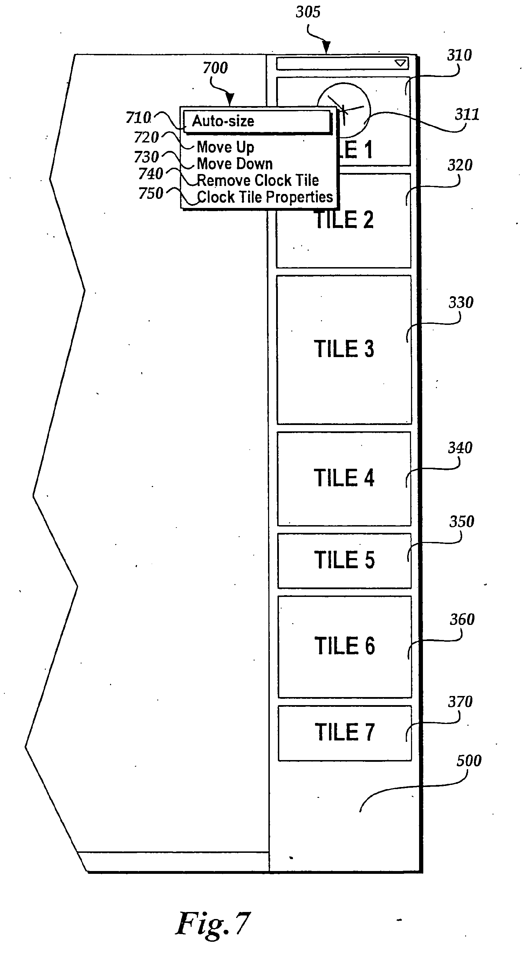

FIGURE 7 is a diagram of a screen display in which a context menu is provided for a tile in accordance with the routine of FIGURE 6. As shown in FIGURE 7, the context menu 700 includes various options, such as Autosize option 710, Move Up option 720, Move Down option 730, Remove Clock Tile option 740, and Clock Tile Properties option 750. It should be noted that the Autosize option 710 does not have a checkmark next to it, which indicates that the Autosize option has not yet been implemented.

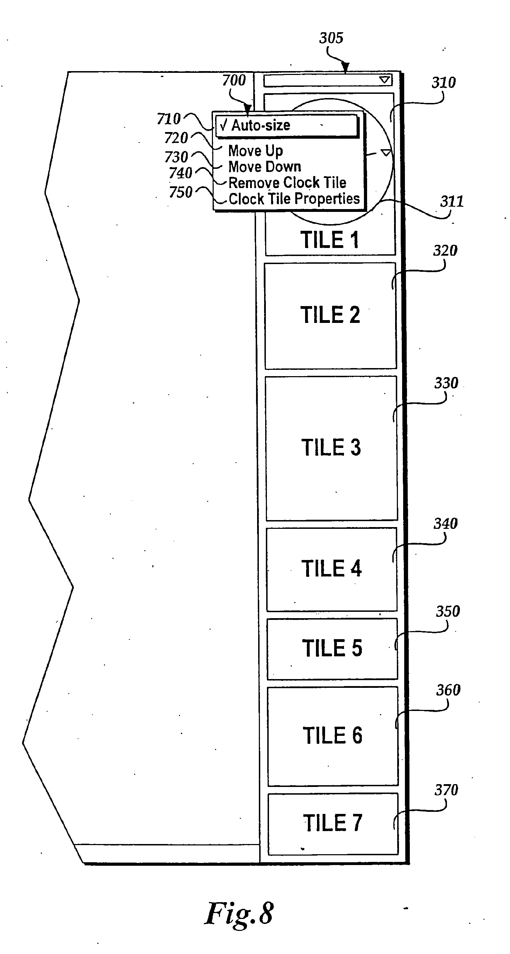

FIGURE 8 is a diagram of a screen display in which the Autosize option has been selected from the context menu of FIGURE 7. As illustrated in FIGURE 8, the tile 310 has been autosized and is now shown to have been expanded to push the other tiles down to take up the available space within the sidebar 305. Thus, the available space 500 in the sidebar 305 of FIGURE 7 is shown to no longer be available in FIGURE 8. As also shown in FIGURE 8, the Autosize option 710 now has a checkmark next to it, indicating that the tile 310 has been autosized.

FIGURES 9A and 9B are flow diagrams of a routine 900 for automatically resizing a tile. As shown in FIGURE 9A, at a block 910, the application seeks to resize the tile. At a decision block 920, a determination is made as to whether the tile is in automatic sizing mode. If the tile is not in automatic sizing mode, then the routine continues to a block 925, where the tile is not automatically resized and may only be manually resized. If the tile is in automatic sizing mode, then the routine continues to a decision block 930.

At decision block 930, a determination is made as to whether the proposed new tile size is larger than the current tile size. If the proposed new tile size is larger than the current tile size, then the routine continues to a decision block 940, which will be described in more detail below. If the proposed new tile size is not larger than the current tile size, then the routine continues to a decision block 935. At decision block 935, a determination is made as to whether the time since the last grow is larger than a specified time threshold. For example, in one embodiment, the specified time threshold may be 60 seconds. If the time since the last grow is larger than the threshold, then the routine continues to a block 945, where the tile is allowed to become the new size. If the time since the last grow is not larger than the threshold, then the routine continues to a block 937, where the size change is queued until the time threshold is reached, after which the tile is allowed to become the new size. By utilizing a required time threshold between certain size changes, a tile is prevented from changing size too frequently, which could be distracting or annoying to the user. As described above, the tile is essentially allowed to increase its size whenever it wants, but is prevented from shrinking until the specified time threshold has been reached since the last grow.

At decision block 940, a determination is made as to whether the new size that the tile would be resized to is greater than a maximum threshold size. If the new size is not greater than the maximum threshold, then the routine continues to the block 945, where the tile is allowed to become the new size. If the new size is greater than the maximum threshold, then the routine continues to a point A which is continued in FIGURE 9B.

As shown in FIGURE 9B, from point A the routine continues to a block 950, where a notification is sent to the user asking for approval of the new size for the tile. At a block 960, the user clicks on the notification to view the available options.

At decision block 970, a determination is made as to whether the user has clicked on the option to allow the tile to become the new size. If the user has not clicked on the option to allow the tile to become the new size (e.g., the user clicks on "NO"), then the routine continues to a block 975, where the tile is set back to its previous size and is placed in manual sizing mode, and the variable AllowedToBeBig is set to false. If the user has clicked on the option to allow the tile to become the new size, then the routine continues to a block 980, where the tile is allowed to become the new size and stays in automatic sizing mode, and wherein the variable AllowedToBeBig is set to true.

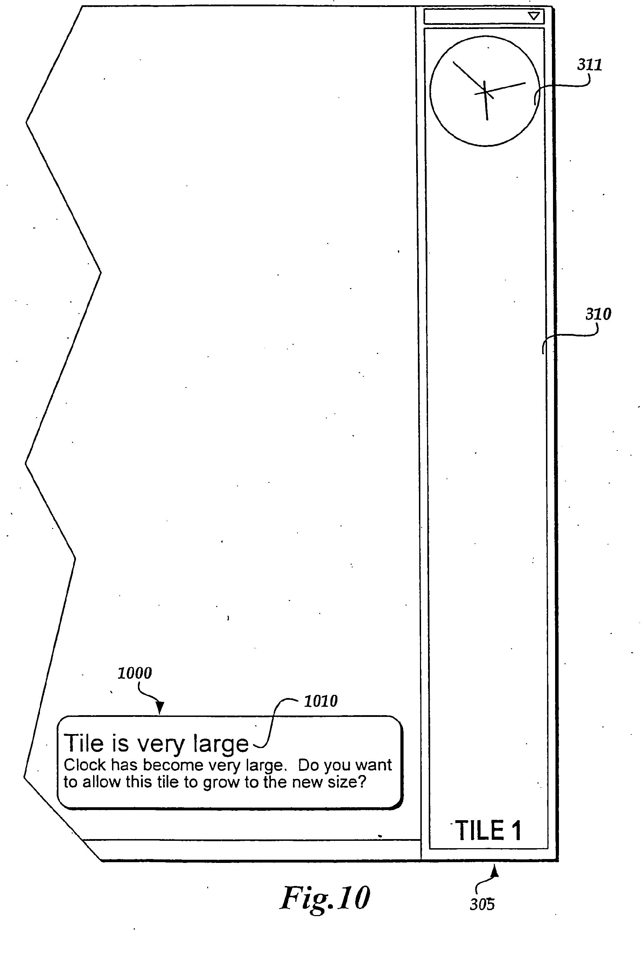

FIGURE 10 is a diagram of a screen display illustrating a notification that is provided to the user in accordance with the routine of FIGURES 9A and 9B. As shown in FIGURE 10, the tile 310 is the only tile in the sidebar 305, and is attempting to be resized to take up all of the available space in the sidebar 305. A notification 1000 is thus provided to the user, located next to the tile 310, and includes text 1010 which states "Tile is very large. Clock has become very large. Do you want to allow this tile to grow to the new size?"

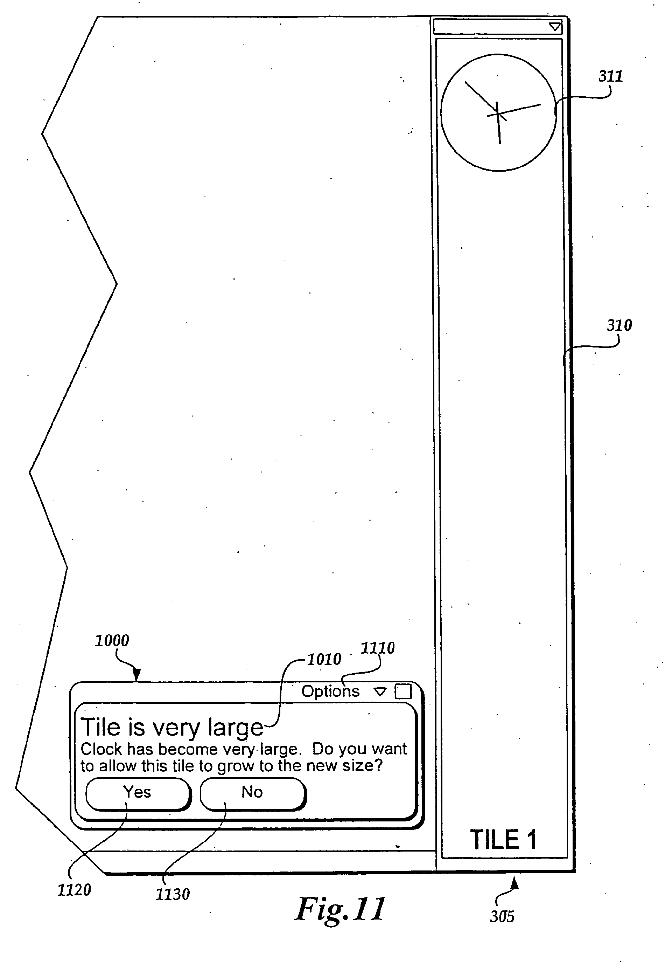

FIGURE 11 is a diagram of a screen display in which a user has selected the notification 1000 of FIGURE 10. As shown in FIGURE 11, once the user selects the notification 1000, options are provided to the user. An options bar 110 is provided, along with a YES option 1120 and a NO option 1130.

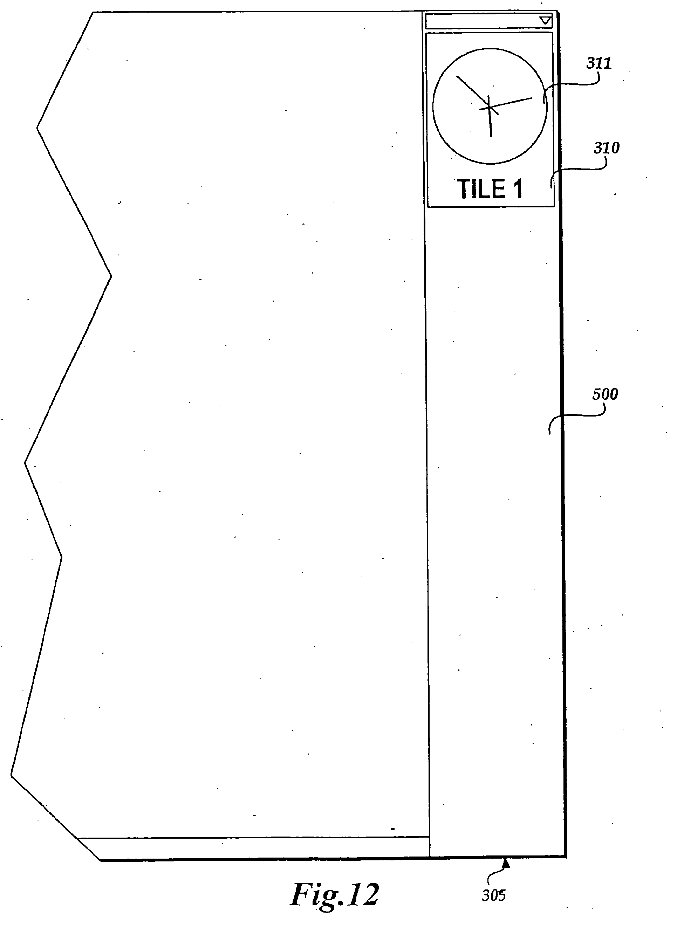

FIGURE 12 is a diagram of a screen display in which the NO option 1130 of FIGURE 11 has been selected by the user. As shown in FIGURE 12, by selecting the NO option 1130, the tile 310 was not allowed to grow to the new size, and was thus returned to its previous size. The returning of the tile 310 to its previous size returns the available space 500 in the sidebar 305.

It will be appreciated that the embodiment of the present invention allows a well designed application to take enough room for its tile to show its necessary information and controls. As noted above, if tile sizes could not be automatically controlled, then users would be forced to manually control the size of all of the tiles. Alternatively, if the tiles were automatically able to take as much room as they wanted, tiles could grow very large in order to get more area for their applications, even when such was not really needed. By allowing both the tile to choose its own size and allowing users to override that size, well designed tiles can be provided that use the right amount of space, while users are able to stop poorly designed tiles from taking too much space. In addition, in a sidebar type environment, where a common area of user interface is shared by many applications, the user is able to stay in control over how the space is being allocated between the tiles.

While the preferred embodiment of the invention has been illustrated and described, it will be appreciated that various changes can be made therein without departing from the spirit and scope of the invention.

## Claims

1. A system for sizing a tile on a computer display, the system comprising:
an automatic sizing routine for automatically sizing the tile during an automatic mode;
a manual sizing routine which allows a user to manually set the size of the tile; and
wherein when the user manually sets the size of the tile a manual mode is entered during which further automatic sizing of the tile is restricted.

2. The system of Claim 1, wherein the tile is provided in a sidebar area.

3. The system of Claim 1, wherein once the manual mode is entered, the user may make a selection to return the tile to the automatic mode.

4. The system of Claim 1, wherein a maximum size is set for the tile and in the manual mode a user is prevented from resizing the tile beyond the maximum size.

5. The system of Claim 4, wherein the maximum size for the tile may be set by the tile.

6. The system of Claim 1, wherein a maximum size is specified for a tile, and in order to automatically size the tile beyond the maximum size, approval must be obtained from the user.

7. The system of Claim 6, wherein the tile is located in a sidebar and the maximum size for the tile may be set by the sidebar.

8. A computer-readable medium having computer-executable components for sizing a tile, the computer-readable medium comprising:
an automatic sizing component for automatically sizing the tile;
a manual sizing component, wherein the use of the manual sizing component places the tile in a manual mode; and
wherein when the tile is in the manual mode, the tile is restricted from being automatically resized.

9. The computer-readable medium of Claim 8, wherein a maximum size is specified for the tile and limitations are placed on sizing the tile above the maximum size.

10. The computer-readable medium of Claim 9, wherein in order to size the tile above the maximum size, approval must be obtained from the user.

11. The computer-readable medium of Claim 10, wherein the approval is obtained from the user through a notification that is provided to the user.

12. The computer-readable medium of Claim 8, further comprising a context menu with options that are provided for the tile.

13. The computer-readable medium of Claim 12, wherein at least one of the context menu options is for autosizing the tile.

14. The computer-readable medium of Claim 12, wherein context menu options include one or more of move up, move down, or delete tile.

15. A system for resizing a tile on a display, the system comprising:
a computing device having a processor and a memory;
a display device communicatively coupled to the computing device for displaying a tile;
a routine for automatically resizing the tile; and
a routine for allowing a user to manually resize the tile.

16. The system of Claim 15, further comprising a sidebar area on the display device in which the tile is located and in which a plurality of additional tiles may be provided.

17. The system of Claim 15, wherein a maximum size is set for the tile, and in order to resize the tile above the maximum size, approval must be obtained from the user.

18. The system of Claim 17, wherein the approval from the user is obtained through a notification that is provided to the user.

19. The system of Claim 15, further comprising a context menu that is provided with options for the tile.

20. In a computer system, a method for sizing a tile, the method comprising:
automatically sizing the tile;
allowing a user to manually set the size of the tile;
setting the tile in a manual mode when the user manually sets the size of the tile; and
wherein while the tile is in the manual mode, preventing the tile from being automatically resized.

21. The method of Claim 20, wherein a sidebar area is provided for the tile and a plurality of additional tiles, and the available space in the sidebar is a factor in the automatic sizing of the tile.

22. The method of Claim 21, wherein an additional factor in the automatic sizing of the tile is the amount of space that the tile requires for displaying its content.

23. The method of Claim 20, wherein a maximum size is set for the tile.

24. The method of Claim 23, wherein in order to automatically size the tile above the maximum size, approval must be obtained from the user.

25. The method of Claim 24, wherein the approval is obtained from the user through a notification that asks the user whether or not the tile should be allowed to be automatically resized to the new size.

26. The method of Claim 25, wherein once the user approves the new size, additional resizing may be performed without further approval, and if the new size is not approved, the tile is placed in a mode which restricts further automatic resizing.

27. In a computer system with a display, a method for sizing a tile on the display, the method comprising:
providing the tile on the display; and
automatically resizing the tile a plurality of times based at least in part on changes in the content that is to be displayed in the tile.

28. The method of Claim 27, wherein a sidebar area is provided on the display in which the tile and a plurality of additional tiles are located.

29. The method of Claim 27, wherein a user is able to manually resize a tile.

30. The method of Claim 29, wherein when a user manually resizes a tile a manual mode is entered, and wherein during the manual mode the tile may not be automatically resized.

31. The method of Claim 27, wherein a maximum size is specified for a tile.

32. The method of Claim 31, wherein in order to automatically resize a tile over the maximum size, approval must be obtained from the user.

33. A computer-readable medium having computer-executable components for sizing a tile, the computer-readable medium comprising:
a tile component for providing the tile on a display; and
an automatic resizing component for automatically resizing the tile a plurality of times.

34. The computer-readable medium of Claim 33, further comprising a context menu component for providing a context menu with options for a tile.

35. The computer-readable medium of Claim 34, wherein the context menu options include an option for automatically resizing the tile.

36. The computer-readable medium of Claim 35, wherein additional context menu options include options for one or more of moving the tile up or down or deleting the tile.

37. The computer-readable medium of Claim 33, wherein a maximum size is specified for a tile, and in order to automatically resize the tile above the maximum size, approval must be obtained from the user.

38. The computer-readable medium of Claim 33, wherein the automatic resizing of the tile is in some instances based at least in part on changes to content that is to be displayed in the tile.

39. The computer-readable medium of Claim 33, wherein a minimum time interval is established to prevent the tile from being automatically resized too frequently.

40. The computer-readable medium of Claim 39, wherein the minimum time interval is used to prevent the tile from being automatically resized smaller, but the tile is allowed to be automatically resized larger, regardless of whether the minimum time interval has been reached.

41. A system for resizing a tile on a computer display, the system comprising:
a computing device having a processor and a memory;
a display device communicatively coupled to the computing device for displaying a plurality of tiles;
a routine for providing the tile on the display; and
a routine for automatically resizing the tile a plurality of times.

42. The system of Claim 41, further comprising a manual resizing routine which allows a user to manually resize the tile, wherein when a user manually resizes a tile a manual sizing mode is entered, wherein during the manual sizing mode the tile may not be automatically resized.

43. The system of Claim 41, wherein the tile is located in a sidebar and a maximum size is specified for the tile by the sidebar, and the tile may only be automatically resized above the maximum size if approval is obtained from the user.

44. The system of Claim 43, wherein if the user does not provide approval for resizing the tile above the maximum size, then the tile enters a manual sizing mode.

45. The system of Claim 43, wherein if the user approves the new size for the tile that is above the maximum size, then further automatic resizing of the tile may be done without requiring further approval from the user.

46. The system of Claim 41, wherein a tile may specify a maximum size for itself which may not be overridden by a user.
